# EUROPÄISCHE PATENTANMELDUNG

(11) **EP 3 275 795 A2**
(43) Veröffentlichungstag der Anmeldung: **31.01.2018**
(21) Anmeldenummer: 17181617.6
(22) Anmeldetag: 17.07.2017
(51) Int. Cl.: B65D 8/00, B62D 61/00, G05D 1/00, H02J 7/02

(54) **ROLLKÖRPER ZUR ZEITWEILIGEN AUFNAHME VON WAREN ODER GÜTERN ZUM ZWECKE DER LAGERUNG UND/ODER DES TRANSPORTS SOWIE VERFAHREN ZUM BETRIEB EINES SOLCHEN ROLLKÖRPERS**

(30) Priorität: 28.07.2016 CH 9862016
(71) Anmelder: WRH Walter Reist Holding AG, 8272 Ermatingen (CH)
(72) Erfinder: Ruge, Martin, 4656 Starrkirch-Wil (CH); Felix, Markus, 8805 Richterswil (CH)
(74) Vertreter: IPrime Rentsch Kaelin AG

(57) **Zusammenfassung**

Ein Rohkörper (10a) zur zeitweiligen Aufnahme von Gütern oder Waren zum Zwecke der Lagerung und/oder des Transports weist, eine einen Innenraum (12) umschliessende Hülle (11) auf, wobei im Innenraum (12) ein Nutzvolumen (13) zur Aufnahme der Güter vorgesehen ist. Eine autonome Arbeitsweise wird dadurch ermöglicht, dass im Innenraum (12) zusätzlich ein Energiespeicher (14) und ein Energieverbraucher (15) angeordnet sind, und dass der Energiespeicher (14) mit dem Energieverbraucher (15) zur Abgabe von Energie verbindbar ist.

## Beschreibung

### Technisches Gebiet

Die vorliegende Erfindung bezieht sich auf das Gebiet der Transport- und Lagertechnik von Waren oder Gütern. Sie betrifft einen Rollkörper zur zeitweiligen Aufnahme von Gütern oder Waren zum Zwecke der Lagerung. Sie betrifft weiterhin ein Verfahren zum Betrieb eines solchen Rollkörpers.

### Technologischer Hintergrund

Rollkörper für Transport-, Lager- und Verpackungszwecke sind bereits aus dem Stand der Technik bekannt.

Dokument WO 2014/191107 A1 offenbart eine transportierbare Verpackungseinheit, umfassend einen Verpackungsinhalt, eine den Verpackungsinhalt umgebende Hülle und ein den Verpackungsinhalt mit der Hülle verbindendes Verbindungsmittel, wobei die umgebende Hülle die äussere Form eines rollbaren Körpers aufweist und das Verbindungsmittel den Verpackungsinhalt in der Hülle fixiert.

Offenbart wird auch ein Verfahren zum Herstellen einer solchen Verpackungseinheit, wobei in einem ersten Schritt der Verpackungsinhalt bereitgestellt wird, in einem zweiten Schritt die Hülle bereitgestellt wird, und in einem dritten Schritt der Verpackungsinhalt in die Hülle eingebracht wird.

Dokument WO 2014/191108 A1 beschreibt eine Transporthalterung für ein Transportobjekt, umfassend einen Rollkörper mit einer ringförmigen Rollfläche zum Abrollen des Rollkörpers auf einer Unterlage, und Haltemittel zum Halten des Transportobjekts im Rollkörper derart, dass der Rollkörper das Transportobjekt umschliesst.

Beschrieben wird auch ein Verfahren zum Transportieren eines Transportobjekts, wobei bei einem Ausgangsort das Transportobjekt in einer solchen Transporthalterung angeordnet wird, wobei die Transporthalterung vom Ausgangsort zu einem Zielort transportiert wird und wobei beim Zielort das Transportobjekt aus der Transporthalterung entnommen wird.

Dokument WO 2014/191106 A1 beschreibt eine Lagereinrichtung für eine Vielzahl von als rollbare Körper ausgebildete Rollverpackungseinheiten, mindestens eine Speichervorrichtung zum Speichern von mehreren Rollverpackungseinheiten, eine Einspeichervorrichtung zum Entgegennehmen einer Rollverpackungseinheit und zum Zuführen dieser Rollverpackungseinheit in die Speichervorrichtung, eine Ausspeichervorrichtung zum rollenden Abführen einer in der Speichervorrichtung gespeicherten Rollverpackungseinheit als wegrollende Rollverpackungseinheit und eine Steuervorrichtung zum Steuern der Ausspeichervorrichtung.

Beschrieben wird auch ein Lagersystem mit mehreren solcher Lagereinrichtungen, wobei rollende Rollverpackungseinheiten über eine oder mehrere Rollbahnen den Lagereinrichtungen zuführbar und/oder davon abführbar sind, insbesondere über mindestens eine Einspeicherrollbahn einer oder mehreren Lagereinrichtungen zuführbar und/oder über mindestens eine Ausspeicherrollbahn von einer oder mehreren Lagereinrichtungen abführbar sind.

Die bekannten Rollkörper sind für den Transport und die Ein- und Auslagerung auf externe Einrichtungen angewiesen, sofern sie nicht aufgrund der Schwerkraft in Bewegung gesetzt bzw. gehalten werden.

Es gibt jedoch Umstände, unter denen eigenständige Aktionen der Rollkörper wünschenswert wären.

Es besteht allgemein das Bedürfnis nach Verbesserungen in diesem Bereich.

### Darstellung der Erfindung

Aufgabe der Erfindung ist es, einen Rollkörper der eingangs erwähnten Art zur Verfügung zu stellen, der die oben erwähnten und andere Nachteile nicht aufweist. Insbesondere soll ein solcher Rollkörper im Rahmen seiner Transport- und Lagerfähigkeiten bestimmte Aufgaben autonom durchführen können.

Es ist auch eine Aufgabe der Erfindung, entsprechende Verfahren für den Betrieb eines solchen Rollkörpers anzugeben.

Diese und andere Aufgaben werden gelöst durch einen erfindungsgemässen Rollkörper und ein erfindungsgemässes Verfahren zum Betrieb eines solchen Rollkörpers gemäss den unabhängigen Ansprüchen. Weitere bevorzugte Ausführungsformen sind in den abhängigen Ansprüchen gegeben

Der erfindungsgemässe Rollkörper zur zeitweiligen Aufnahme von Waren oder Gütern zum Zwecke der Lagerung und/oder des Transports weist eine einen Innenraum umschliessende Hülle auf, wobei im Innenraum ein Nutzvolumen zur Aufnahme der Güter vorgesehen ist.

Er ist dadurch gekennzeichnet, dass im Innenraum zusätzlich ein Energiespeicher und ein Energieverbraucher angeordnet sind, und dass der Energiespeicher mit dem Energieverbraucher zur Abgabe von Energie verbindbar ist.

Eine erste Ausgestaltung der Erfindung ist dadurch gekennzeichnet, dass der Energiespeicher zur Speicherung von elektrischer Energie ausgebildet ist, und dass der Energieverbraucher elektrische Energie verbraucht. Als Speicher sind hier vor allem Superkondensatoren und Akkumulatoren geeignet.

Am oder im Rollkörper können dabei Mittel zur Zuführung von elektrischer Energie von aussen vorgesehen sein, welche Mittel mit dem Energiespeicher in Verbindung stehen.

Die Mittel zur Zuführung von elektrischer Energie können eine oder mehrere Induktionsspulen aufweisen. Die Induktion kann dabei entweder durch ein Wechselfeld nach Art eines Transformators oder (z.B. bei konstantem Magnetfeld) durch Drehung der Induktionsspulen nach Art eines Generators erfolgen.

Insbesondere können dabei mehrere Induktionsspulen vorgesehen sein, die mit ihrer Spulenachse in unterschiedlichen Raumrichtungen orientiert sind.

Die Mittel zur Zuführung von elektrischer Energie können aber auch von aussen zugängliche elektrische Kontakte umfassen.

Dabei können die elektrischen Kontakte über die Aussenfläche des Rollkörpers verteilt angeordnet sein, um die Kontaktmöglichkeiten zu verbessern und die Kontaktwahrscheinlichkeit zu erhöhen.

Wenn der Rollkörper kugelförmig ist, können dazu die elektrischen Kontakte kalottenförmig ausgebildet sein.

Es ist aber auch denkbar, dass die Mittel zur Zuführung von elektrischer Energie wenigstens einen Lichtwandler umfassen, welcher von aussen eingestrahltes Licht in elektrische Energie umwandelt.

Eine andere Ausgestaltung der Erfindung ist dadurch gekennzeichnet, dass der Energieverbraucher einen Antrieb zur autonomen Bewegung des Rollkörpers umfasst. Der Rollkörper ist dann für eine Bewegung nicht auf die Schwerkraft oder Anstösse von aussen angewiesen, sondern kann sich selbständig bewegen, wenn er z.B. von aussen über geeignete Kommunikationskanäle entsprechende Steuerungsbefehle erhält.

Der Antrieb kann dazu wenigstens einen elektrischen Motor umfassen, welcher wenigstens ein Antriebselement zur Übertragung eines Drehmoments in Drehung versetzt.

Es ist aber auch denkbar, dass der Antrieb wenigstens eine Propellereinheit umfasst.

Gemäss einer anderen Ausgestaltung der Erfindung kann der Energieverbraucher alternativ oder zusätzlich Mittel zur Datenverarbeitung und/oder-speicherung und/oder Mittel zur drahtlosen Kommunikation und/oder Mittel zur Positionsbestimmung des Rollkörpers umfassen.

Weiterhin kann der Rollkörper mit aktiven oder passiven Informationsträgern bzw. Identifikationsmitteln wie z. B. einem Etikett, einem RFID, Strichcode, Matrixcode, Farbcode, Zahlencode, Hologramm oder einem Thermocode ausgestattet sein, die optisch, magnetisch oder funktechnisch auslesbar und ggf. einlesbar sind.

Innerhalb des Energieverbrauchers können motorische Antriebe, aber auch elektronische Schaltungen, Datenspeicher und/oder Prozessoren zur Datenverarbeitung, z. B. Mikroprozessoren, vorgesehen werden. Weiterhin können im Rollkörper für verschiedene Aufgaben Sensoren für physikalische Grössen wie z.B. Temperatur, Beschleunigung und/oder Wandler, z.B. piezoelektrische Wandler, pneumatischer Wandler, induktive Wandler oder elektromagnetische Wandler, eingesetzt werden.

Auch kann in dem Rollkörper eine Datenverarbeitungsanlage mit Datenspeicher vorgesehen werden, die Produktinformationen über im Rollkörper eingelagerte/transportierte Waren wie zum Beispiel Gewicht, Haltbarkeitsdatum, Ablaufdatum, Fertigungsdatum, Anzahl/Mengenangabe, Reifezustand, Temperatursollwert, Temperaturhistorie, Zustellnummer, eine Transportauftragsnummer, eine Statusangabe, Informationen zu Produktgeometrie, aufnimmt, verarbeitet und abgibt.

Dabei ist es denkbar, dass in der Datenverarbeitungsanlage mit den Produktdaten und Informationen über Position, Förderweg des Rollkörpers und andere äussere Parameter Rechenoperationen durchgeführt werden, und als Ergebnis dieser Rechneroperationen elektromechanische Stellglieder ansteuert werden, welche den weiteren Weg des Rollkörpers in einer Speicher- oder Transportanlage bestimmen.

Ein erfindungsgemässes Verfahren zum Betrieb eines Rollkörpers nach der Erfindung ist dadurch gekennzeichnet, dass der Energiespeicher im Rollkörper austauschbar untergebracht ist, und dass der Energiespeicher von Zeit zu Zeit gegen einen vollen Energiespeicher ausgetauscht wird.

Ein anderes erfindungsgemässes Verfahren zum Betrieb eines Rollkörpers nach der Erfindung ist dadurch gekennzeichnet, dass der Energiespeicher im Rollkörper fest untergebracht ist, und dass der Energiespeicher von Zeit zu Zeit von aussen aufgeladen wird.

Dabei kann der Rollkörper wenigstens eine Induktionsspule aufweisen, wobei der Rollkörper zum Aufladen des Energiespeichers einem Magnetfeld ausgesetzt wird. Insbesondere kann das Magnetfeld ein Wechselfeld sein.

Der Rollkörper kann aber auch von aussen zugängliche elektrische Kontakte aufweisen, wobei der Rollkörper zum Aufladen des Energiespeichers mit äusseren elektrischen Kontakten elektrisch verbunden wird.

Insbesondere kann der Rollkörper dabei zum Verbinden mit den äusseren elektrischen Kontakten in eine dafür vorgesehene Ladestation bewegt werden.

Der Rollkörper kann aber auch während des Rollens über eine vorgegebene Wegstrecke mit den äusseren elektrischen Kontakten elektrisch verbunden werden und verbunden bleiben.

Um einen Betrieb mit den Rollkörpern möglichst reibungslos und unterbrechungsfrei durchführen zu können, ist es zweckmässig und vorteilhaft, den Energiespeicher nur bei wirklichem Bedarf zu belasten, ansonsten aber-z.B. wenn sich der Rollkörper in einem Lager in ruhender Lage bzw. Warteposition befindet - möglichst unbelastet zu lassen. Hier bietet es sich an, einen Stand-By-Modus im Rollkörper vorzusehen, bei dem der Energiespeicher nur soweit belastet wird, wie es notwendig ist, um den Rollkörper für eine spätere Aktivierung bereitzuhalten. Eine solche Aktivierung kann z.B. durch Funksignale erfolgen, setzt aber voraus, dass die entsprechende Elektronik im Rollkörper zumindest von aussen ansprechbar ist.

### Kurze Beschreibung der Zeichnungen

Zum besseren Verständnis der vorliegenden Erfindung wird nachfolgend auf die Zeichnungen Bezug genommen. Diese zeigen lediglich Ausführungsbeispiele des Erfindungsgegenstands.
- Figur 1: zeigt schematisch im Schnitt die Grundanordnung eines einfachen Ausführungsbeispiels eines Rollkörpers nach der Erfindung.
- Figur 2: zeigt schematisch im Schnitt ein anderes Ausführungsbeispiel eines Rollkörpers nach der Erfindung mit induktiver Aufladung des Energiespeichers über ein Magnetfeld.
- Figur 3: zeigt schematisch im Schnitt ein weiteres Ausführungsbeispiel eines Rollkörpers nach der Erfindung mit Aufladung des Energiespeichers durch Lichteinstrahlung.
- Figur 4: zeigt schematisch im Schnitt ein anderes Ausführungsbeispiel eines Rollkörpers nach der Erfindung mit Aufladung des Energiespeichers durch elektrische Verbindung mit äusseren elektrischen Kontakten.
- Figur 5: zeigt schematisch im Schnitt ein wieder anderes Ausführungsbeispiel eines Rollkörpers nach der Erfindung mit induktiver Aufladung des Energiespeichers über ein Magnetfeld mittels räumlich unterschiedlich orientierter Induktionsspulen.
- Figur 6: zeigt schematisch in einer Aussenansicht ein weiteres Ausführungsbeispiel der Erfindung mit über die Oberfläche verteilten kalottenförmigen elektrischen Kontaktflächen.
- Figur 7: zeigt schematisch im Schnitt ein anderes Ausführungsbeispiel eines Rollkörpers nach der Erfindung mit induktiver Aufladung des Energiespeichers über ein Magnetfeld mittels einer beweglich gelagerten Induktionsspule.
- Figur 8: zeigt schematisch im Schnitt ein wieder anderes Ausführungsbeispiel eines Rollkörpers nach der Erfindung mit induktiver Aufladung des Energiespeichers über ein Magnetfeld mittels einer beweglich gelagerten Induktionsspule sowie mit einem inneren Rollantrieb in einer (passiven) rollenden Abwärtsbewegung auf einer Schräge.
- Figur 9: zeigt schematisch den Rollkörper aus Figur 8 in einer (aktiv angetriebenen) rollenden Aufwärtsbewegung auf einer Schräge.
- Figur 10: zeigt schematisch den Transport eines Rollkörpers nach der Erfindung mittels einer Drohne.
- Figur 11: zeigt schematisch einen geeigneten lösbaren Koppelmechanismus zwischen Drohne und Rollkörper.
- Figur 12: zeigt schematisch in einer Prinzipdarstellung eine zum Laden eines Rollkörpers nach der Erfindung vorgesehene Ladestation.
- Figur 13: zeigt schematisch im Schnitt ein weiteres Ausführungsbeispiel eines Rollkörpers nach der Erfindung mit einem Paar Antriebsrädern zur richtungsgesteuerten Bewegung des Rollkörpers.
- Figur 14: zeigt schematisch im Schnitt ein anderes Ausführungsbeispiel eines Rollkörpers nach der Erfindung mit mehreren ausfahrbaren Propellereinheiten zur Bewegung des Rollkörpers nach Art einer Drohne.
- Figur 15: zeigt schematisch im Schnitt ein weiteres Ausführungsbeispiel eines Rollkörpers nach der Erfindung, bei dem im Rahmen des Energieverbrauchers ein selbsttätig ausfahrbarer (mechanischer und/oder elektrischer) Ankopplungsmechanismus vorgesehen ist.
- Figur 16: zeigt schematisch die Möglichkeit einer drahtlosen Kommunikation zum Austausch von Informationen und/oder Übermittlung von Steuerbefehlen zwischen dem Rollkörper und einer Kommunikationszentrale.

### Wege zur Ausführung der Erfindung

Die im Folgenden gegebenen Beispiele dienen der besseren Veranschaulichung der Erfindung, sind jedoch nicht dazu geeignet, die Erfindung auf die hierin offenbarten Merkmale zu beschränken.

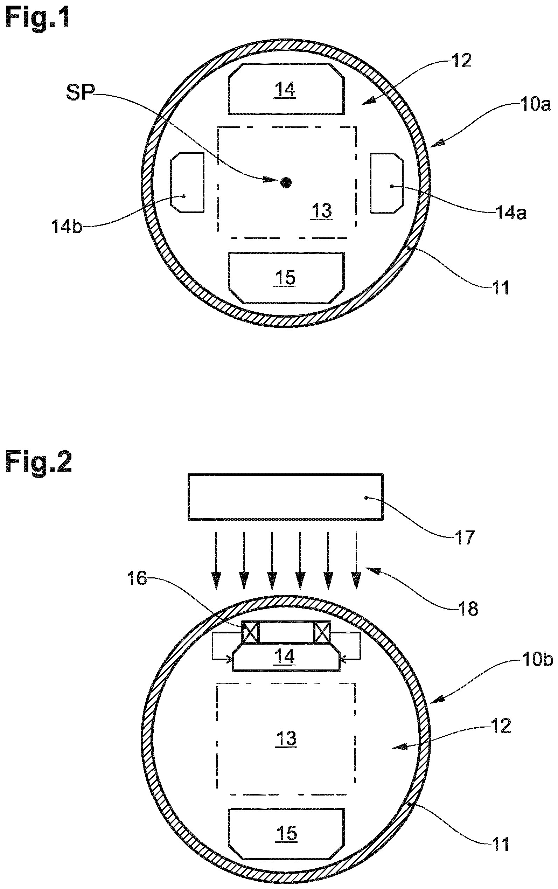

In Figur 1 ist in einer Schnittdarstellung die Grundanordnung eines einfachen Ausführungsbeispiels eines Rollkörpers nach der Erfindung wiedergegeben. Der Rollkörper 10a der Figur 1 hat in diesem Beispiel die Form einer Kugel mit einer geschlossenen kugelschalenförmigen Hülle 11, die an einer nicht dargestellten Stelle geöffnet (z.B. in zwei Kugelhälften zerlegt) werden kann, um darin etwas zum Transport und/oder zur Lagerung unterzubringen, oder etwas Untergebrachtes daraus wieder zu entnehmen. Die Hülle 11 umgibt einen hohlen Innenraum 12, in dem vorzugsweise zentral ein Nutzvolumen 13 ausgewiesen ist, das zur Aufnahme einer Ware oder eines Gutes dient. Die Hülle 11 kann abweichend von der Darstellung in Figur 1 auch durchbrochen ausgebildet sein oder sogar eine offene, gitterförmige Struktur aufweisen, sofern dies mit den gelagerten und transportierten Gütern oder Waren vereinbar ist.

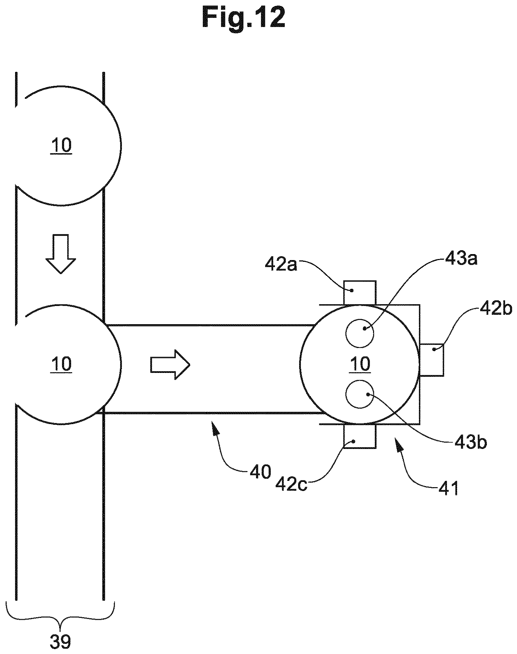

Neben dem Nutzvolumen 13, das zur Aufnahme der Waren oder Güter freizuhalten ist, sind in dem Rollkörper 10a ein Energiespeicher 14 und ein Energieverbraucher 15 untergebracht, die beide in Figur 1 als schematisierte Blöcke eingezeichnet sind, jedoch auch eine andere, z.B. in mehrere Teile unterteilte, Gestalt haben können. Der Energiespeicher 14 speichert Energie, die von dem Energieverbraucher 15 bei Bedarf abgerufen werden kann. Hierdurch wird der Energiespeicher 14 entladen und muss nach einer gewissen Zeit entweder gegen einen vollgeladenen Energiespeicher gleicher Art ausgetauscht werden (Stichwort "Batteriewechsel"), oder er muss von aussen aufgeladen werden. Auf die verschiedenen Arten der Aufladung wird nachfolgend noch näher eingegangen. Wie bereits erwähnt, kann der Energiespeicher 14 unterteilt werden in Energiespeicher 14a und 14b (gestrichelt in Figur 12 eingezeichnet). Die Energiespeicher 14a und 14b können aber auch zusätzlich vorgesehen werden, so dass 3 Energiespeicher 14, 14a und 14b vorhanden sind. Hintergrund einer solchen Massnahme ist es, eine bessere Verteilung der Massen innerhalb der Hülle 11 zu erreichen, um den Schwerpunkt SP der Anordnung möglichst in den Mittelpunkt der Kugel zu bringen, wie dies in Figur 1 angedeutet ist. Eine solche Lage des Schwerpunkts SP verhindert, dass sich beim Rollen des Rollkörpers unerwünschte Taumelbewegungen ausbilden. Selbstverständlich kann über den Energieverbraucher 15 hinaus auch eine im Nutzvolumen 13 befindliche Ware zur Optimierung der Schwerpunktslage herangezogen werden.

In den meisten Fällen wird der Energiespeicher 14 als elektrischer Energiespeicher ausgeführt sein, der elektrische Energie enthält und an einen elektrischen Energieverbraucher 15 abgibt. Denkbar ist in diesem Fall als Energiespeicher ein sogenannter Superkondensator oder ein wieder aufladbarer Akkumulator ausreichender Speicherkapazität, z.B. vom Lithium-Ionen-Typ. Ein Superkondensator reicht aus, wenn der Energieverbraucher 15 lediglich eine elektronische Schaltung zur Datenverarbeitung, Ortung oder Kommunikation umfasst. Ist der Energieverbraucher ein motorisierter Antrieb für den Rollkörper, muss ein Akkumulator ausreichender Kapazität als Energiespeicher vorgesehen werden. Es ist aber auch denkbar, lediglich einen Pufferspeicher (z.B. einen "normalen" Kondensator) als Energiespeicher einzusetzen, wenn der Energieverbrauch fortlaufend durch Nachladung von aussen im Mittel wieder ausgeglichen wird.

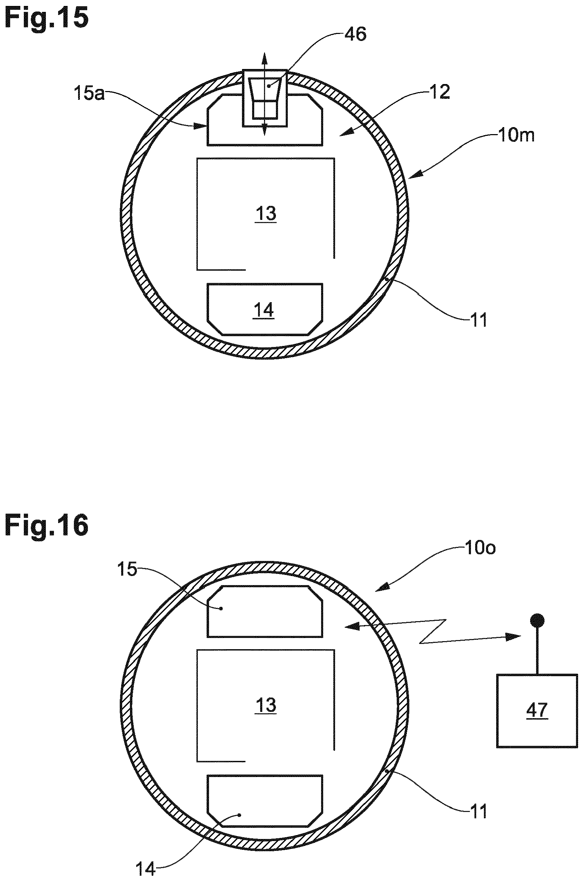

Um einen Betrieb mit den Rollkörpern möglichst reibungslos und unterbrechungsfrei durchführen zu können, ist es zweckmässig und vorteilhaft, den Energiespeicher 14 nur bei wirklichem Bedarf zu belasten, ansonsten aber - z.B., wenn sich der Rollkörper in einem Lager in ruhender Lage bzw. Warteposition befindet - möglichst unbelastet zu lassen. Hier bietet es sich an, einen Stand-By-Modus im Rollkörper vorzusehen, bei dem der Energiespeicher 14 nur soweit belastet wird, wie es notwendig ist, um den Rollkörper für eine spätere Aktivierung bereitzuhalten. Eine solche Aktivierung kann z.B. durch Funksignale erfolgen (siehe Figur 16), setzt aber voraus, dass die entsprechende Elektronik im Rollkörper zumindest von aussen ansprechbar ist.

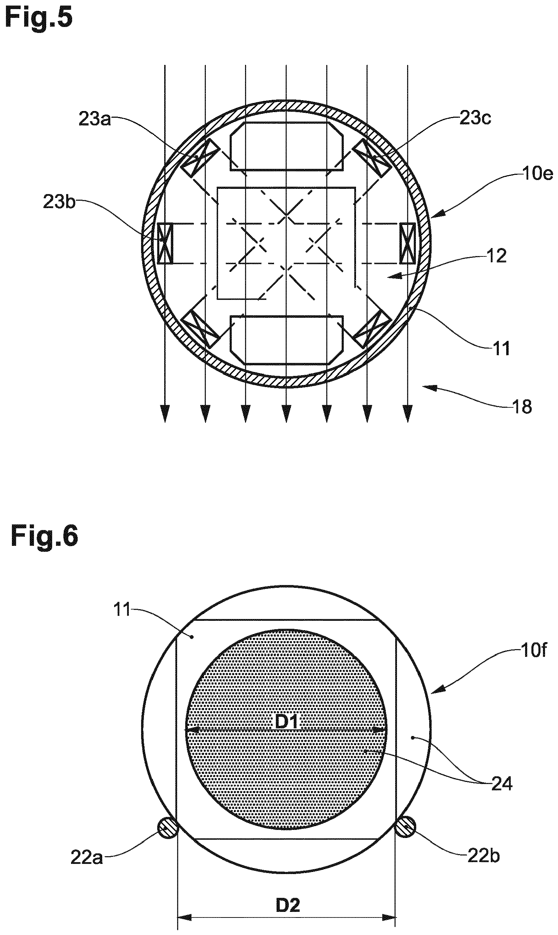

Eine erste Möglichkeit, einen elektrischen Energiespeicher 14 von aussen nachzuladen, ist in Figur 2 schematisch dargestellt. In dem dort gezeigten Rollkörper 10b ist, vorzugsweise in der Nähe des Energiespeichers 14, eine Induktionsspule 16 angeordnet, die von einem ausserhalb mittels einer Magnetfeldquelle 17 erzeugten Magnetfeld 18 durchsetzt werden kann. Die Änderung des zugehörigen magnetischen Flusses durch die Induktionsspule induziert in der Induktionsspule 16 einen Strom, der im Energiespeicher 15 in Form von Ladung gespeichert werden kann. Die Änderung des Flusses kann durch Einsatz eines magnetischen Wechselfeldes erzeugt werden. Es ist aber auch denkbar, ein Gleichfeld zu benutzen, wenn die Flussänderung durch eine Bewegung des Rollkörpers 10b hinreichend gross ist. In diesem Fall kann gemäss Figur 5 bei einem Rollkörper 10e eine Mehrzahl von Induktionsspulen 23a-c unterschiedlicher räumlicher Ausrichtung dafür sorgen, dass immer eine oder mehrere Spulen vom magnetischen Fluss durchsetzt werden. Die Induktionsspulen 23a-c können dabei sogar in die Hülle 11 des Rollkörpers 10e integriert und - bei Verwendung von Kunstharz - als eine Art Faserverstärkung eingesetzt werden, um die Hülle 11 zusätzlich zu stabilisieren.

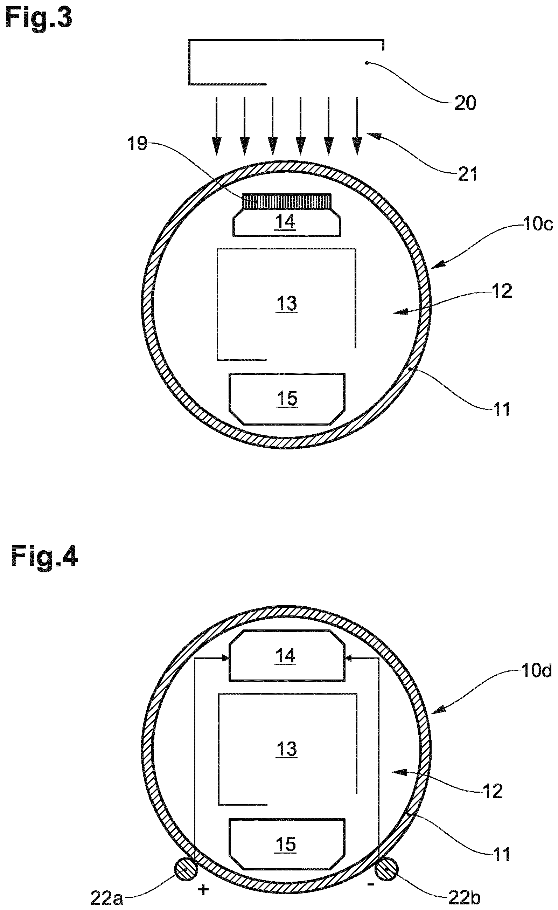

Eine andere Art der Aufladung eines elektrischen Energiespeichers 14 ist in Figur 3 schematisch gezeigt. Im dortigen Rollkörper 10c ist ein flächiger Lichtwandler 19 vorgesehen, der von aussen einfallendes Licht 21 aus einer Lichtquelle 20 (Sonne oder künstlich erzeugt) in elektrische Energie umwandelt und an den Energiespeicher 14 weiterleitet. Hierzu muss zumindest der Teil der Hülle 11 über dem Lichtwandler 19 lichtdurchlässig ausgestaltet sein. Dies kann durch entsprechende Durchbrüche in einer ansonsten lichtundurchlässigen Hülle bewirkt werden (siehe Figur 3). Es ist aber auch denkbar, die Hülle 11 an dieser Stelle oder insgesamt lichtdurchlässig (transparent) auszuführen.

Eine weitere mögliche Art der Aufladung ist im Schema der Figur 4 gezeigt. Der dortige Rollkörper 10d ist mit von aussen zugänglichen (in Figur 4 nicht sichtbaren) elektrischen Kontaktflächen ausgestattet, zu denen mit entsprechenden elektrischen Kontakten 22a und 22b von aussen eine elektrische Verbindung hergestellt werden kann. Im Kontaktfall kann mit Gleich- oder auch Wechselspannung elektrische Energie in den Energiespeicher 14 eingespiesen werden. Es versteht sich von selbst, dass eine dafür notwendige allfällige Elektronik (Gleichrichter, Regelungen Überspannungsschutz etc.) im Rollkörper 10d eingebaut ist.

Ein spezieller Fall der Aussenkontaktierung ist in Figur 6 dargestellt. Der sphärische Rollkörper 10f der Figur 6 ist aussen mit (insgesamt sechs) kalottenförmigen elektrischen Kontaktflächen 24 ausgestattet, die alle den gleichen maximalen Durchmesser D1 haben. Dem gegenüber sind als elektrische Kontakte 22a und 22b zwei senkrecht zur Zeichenebene verlaufende Schienen vorgesehen, auf denen der Rollkörper 10f in Schienenlängsrichtung rollen kann. Der Abstand D2 der Schienen 22a, 22b ist grösser gewählt als der maximale Durchmesser D1 der Kalottenflächen 24. Rollt der Rollkörper auf den Schienen, können die Kontakte 22a und 22b aufgrund der Bedingung D1 < D2 nicht von den Kontaktflächen 24 kurzgeschlossen werden. Dagegen stehen meist zwei verschiedene, wechselnde Kontaktflächen 24 mit den Kontakten 22a und 22b in elektrischer Verbindung. Werden nun durch eine interne Elektronik immer gerade die beiden Kontaktflächen 24 mit dem Energiespeicher 14 verbunden, an denen die Spannung der Kontakte 22a und 22b anliegt, kann über weite Strecken des Rollweges der Energiespeicher geladen werden. Es ist in diesem Zusammenhang auch denkbar, weniger (mindestens zwei) oder mehr Kontaktflächen vorzusehen, vorausgesetzt, dass ein Kurzschluss der Aussenkontakte sicher vermieden wird.

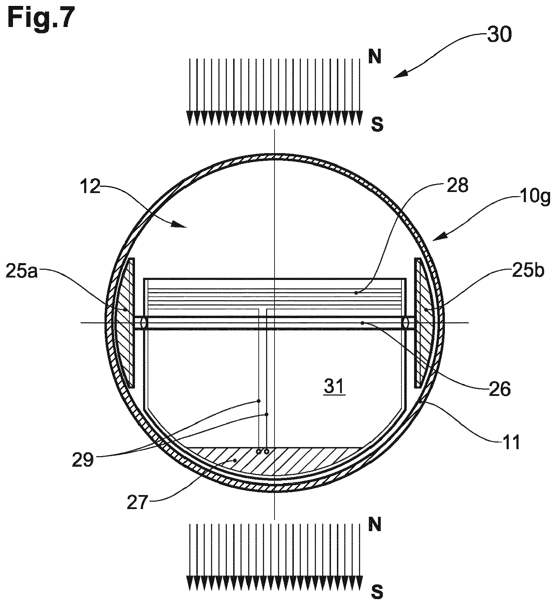

Ein weiteres Ausführungsbeispiel für einen Rollkörper nach der Erfindung ist in Figur 7 wiedergegeben. Der dortige Rollkörper 10g hat einen Einsatz 31, der mittels einer in seitlichen Lagerelementen 25a und 25b gelagerten Drehachse 26 immer dadurch nach unten hängt, dass im unteren Bereich ein schweres Speicherelement 27 angeordnet ist. Die oberhalb der Drehachse 26 angeordnete Induktionsspule 28 hat dann eine bestimmte Ausrichtung zu einem externen Magnetfeld 30, dass als Wechselfeld eine Spannung induziert, die über Verbindungsleitungen 29 an das Speicherelement 27 angelegt werden kann, um dieses aufzuladen.

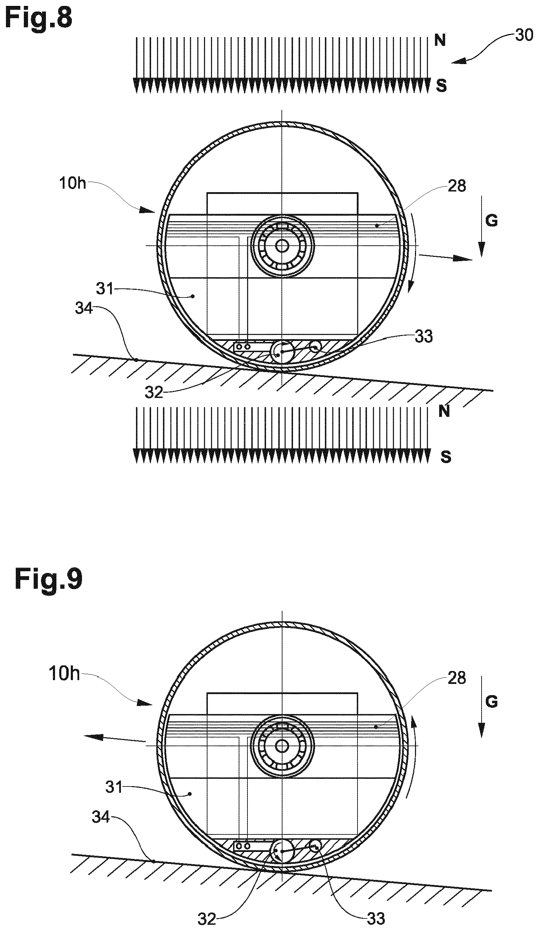

Gemäss Figur 8 und 9 kann eine vergleichbare Anordnung in einem Rollkörper 10h mit einem inneren Antrieb kombiniert werden, der ein auf der Innenwand der Hülle mit Reibschluss ablaufendes Antriebselement 32 aufweist, welches von einem (elektrischen) Motor 33 angetrieben wird. Im Fall der Figur 8 rollt der Rollkörper 10h aufgrund der Schwerkraft G auf einer Schräge 34 bergab und kann dabei über das Magnetfeld 30 mit Energie geladen werden. Im Fall der Figur 9 fährt der Rollkörper 10h unter Energieverbrauch autonom die Schräge bergauf und wird dabei vom Motor 33 angetrieben.

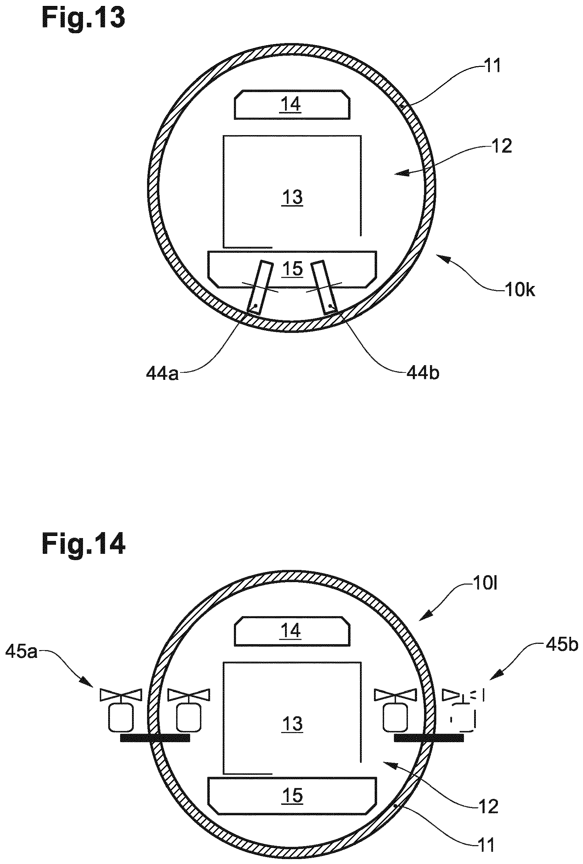

Werden gemäss Figur 13 zwei voneinander beabstandete, senkrecht zur Hülle 11 stehende Antriebsräder 44a und 44b in einem Rollkörper 10k eingesetzt, kann durch unterschiedlichen Betrieb der beiden Antriebsräder 44a und 44b nach Art einer Panzerkettensteuerung der Rollkörper 10k autonom in jede beliebige Richtung gerollt werden. Derartige innere Antriebe können auch dazu verwendet werden, um bei einem Rollkörper, der vermittels der Schwerkraft eine Schräge herunterrollt (siehe Figur 8), durch Rekuperation Energie zurückzugewinnen und im Energiespeicher abzuspeichern, sofern der Antriebsmotor bzw. die Antriebsmotoren als über den Reibschluss eingekoppelte Generator(en) arbeiten kann (können).

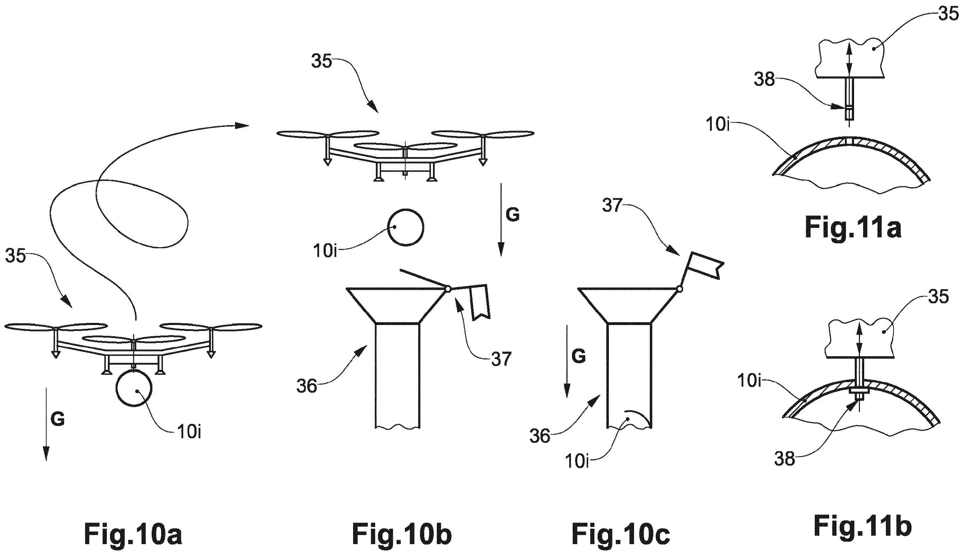

Ist kein eigener Antrieb im Rollkörper vorgesehen oder wird ein vorhandener Rollantrieb der in Figur 8 und 9 gezeigten Art nicht benutzt, kann gemäss Figur 10 und 11 ein Rollkörper 10i (mit entsprechendem Wareninhalt) auch durch externe Transportmittel transportiert werden. Im gezeigten Fall wird dazu beispielsweise eine Drohne 35 eingesetzt, die an den Rollkörper 10i ankoppelt (Figur 10(a)), den Rollkörper 10i samt Inhalt an einen Zielort befördert (Figur 10(b)) und dort selbständig ablädt. Hierzu kann als "Briefkasten" eine trichterförmige Aufnahmevorrichtung 36 vorgesehen werden, welche den abgeworfenen Rollkörper 10i aufnimmt und gegebenenfalls weiterbefördert und/oder verteilt und den Empfang mittels einer Signalvorrichtung 37 anzeigt (Figur 10(c)). Für das Ankoppeln kann die Drohne 35 mit einem stiftförmigen Kopplungselement 38 ausgestattet sein (Figur 11(a)), das in eine entsprechende Öffnung in der Hülle des Rollkörpers 10i einfährt und im eingefahrenen Zustand verriegelt wird (Figur 11(b)). Die Öffnung ist zweckmässigerweise trichterförmig ausgebildet (nicht in Figur 11 (b) gezeigt), um das Einführen zu erleichtern. Der Vorteil des Rollkörpers besteht in diesem Zusammenhang darin, dass er eine strömungsgünstige Form hat, was den Lufttransport erleichtert, und dass er aufgrund der Kugelform nach dem Abwurf einfacher in die Aufnahmevorrichtung 36 gelangen kann. Diese Art des Transportes und Abgabe der Rollkörper ist nicht nur im Rahmen der vorliegenden Erfindung für "aktive" Rollkörper mit Energiespeicher und Energieverbraucher von Vorteil, sondern kann auch als vorteilhafte Lösung bei "passiven" Rollkörpern ohne Energiespeicher und ohne Energieverbraucher eingesetzt werden.

In diesem Zusammenhang kann gemäss Figur 15 bei einem Rollkörper 10m im Rollkörper selbst innerhalb des Energieverbrauchers 15a ein automatisch ausfahrbarer Kopplungsmechanismus 46 vorgesehen werden, der auf Anforderung durch eine Drohne oder dgl. selbsttätig aus der Kugel herausfährt (Doppelpfeil) und ein Andocken an die Drohne passiv ermöglicht oder sogar aktiv selbst durchführt. Gleichzeitig kann dieser ausfahrbare Ankopplungsmechanismus 46 auch als elektrische Ladekupplung für das Aufladen des Energiespeichers 14 ausgebildet sein und mit entsprechenden Aussenkontakten zusammenwirken.

Es ist aber auch denkbar, gemäss Figur 14 einen Rollkörper 10l selbst mit entsprechenden Propellereinheiten 45a und 45b auszurüsten, die bei einer Rollbewegung des Rollkörpers 10l im Rollkörper 10l eingefahren sind (durchgezogene Zeichnung in Figur 14), für den Übergang zum Drohnenbetrieb jedoch ausgefahren werden können (gestrichelter Teil in Figur 14).

Im Rahmen der Erfindung ist es auch denkbar, gemäss Figur 12 in einer mit Rollbahnen 39 für die Rollkörper 10 arbeitenden Vorrichtung eine separate Ladestation 41 vorzusehen, die beispielsweise als Abzweig 40 von der Rollbahn 39 ausgebildet ist. Der zu ladende Rollkörper 10 wird durch einen (nicht gezeigten Weichen- oder Ausstossmechanismus) von der Rollbahn 39 in den Abzweig 40 umgelenkt und gelangt in die Ladestation 41. Dort sind Drehantriebe 42a-c verteilt angeordnet, die es ermöglichen, den Rollkörper 10 in der Ladestation in eine solche Position zu drehen, dass am Rollkörper angeordnete Kontaktstellen 43a und 43b mit entsprechenden Kontakten in der Ladestation 41 verbunden werden, so dass ein Ladevorgang gestartet werden kann.

Der Betrieb der beschriebenen Rollkörper kann sich unterschiedlich gestalten:
Im Rahmen der Erfindung ist es denkbar, dass der Energiespeicher im Rollkörper austauschbar untergebracht ist, und dass der Energiespeicher von Zeit zu Zeit gegen einen vollen Energiespeicher ausgetauscht wird. Hierzu können als Energiespeicher z.B. herkömmliche Batterien eingesetzt werden.

Alternativ kann der Energiespeicher im Rollkörper fest untergebracht sein. Er wird dann von Zeit zu Zeit von aussen aufgeladen, wobei die oben beschriebenen Lademöglichkeiten benutzt werden können.

Wenn der Rollkörper eine oder mehrere Induktionsspulen aufweist, wird der Rollkörper zum Aufladen des Energiespeichers einem Magnetfeld ausgesetzt, wobei das Magnetfeld ein Wechselfeld sein kann.

Der Rollkörper kann aber auch von aussen zugängliche elektrische Kontakte aufweisen. Er wird dann zum Aufladen des Energiespeichers mit äusseren elektrischen Kontakten elektrisch verbunden. Dies kann in der dafür vorgesehenen, oben beschriebenen Ladestation geschehen. Es ist aber auch denkbar, den Rollkörper während des Rollens über eine vorgegebene Wegstrecke mit äusseren elektrischen Kontakten elektrisch zu verbinden und verbunden zu halten.

Soll der Rollkörper nach der Erfindung gewisse Aufgaben autonom durchführen, können ihm dazu die notwendigen Befehle, insbesondere für den Wechsel von einen Stand-Byin einen Aktiv-Modus, über eine drahtlose Kommunikationsstrecke übermittelt werden. Gemäss Figur 16 ist dann der Rollkörper 10o aus dem entsprechend konfigurierten Energieverbraucher 15 heraus drahtlos mit einer Kommunikationszentrale 47 verbunden, die einerseits Befehle und/oder Informationen und/oder Abfragen an den Rollkörper 10o übermitteln kann, aber auch auf Informationen aus dem Rollkörper, z.B. über den Ladezustand des Energiespeichers 14 oder über die im Nutzvolumen 13 vorgehaltene Ware, reagieren kann. Um die drahtlose Kommunikation zu ermöglichen, kann eine Antenne aussen oder - wenn die Hülle für die drahtlose Verbindung durchlässig ist - auch innen angeordnet sein.

Weiterhin kann der Rollkörper 10 mit aktiven oder passiven Informationsträgern bzw. Identifikationsmitteln wie z. B. einem Etikett, einem RFID, Strichcode, Matrixcode, Farbcode, Zahlencode, Hologramm oder einem Thermocode ausgestattet sein, die optisch, magnetisch oder funktechnisch auslesbar und ggf. einlesbar sind.

Innerhalb des Energieverbrauchers 15 können - wie beschrieben - motorische Antriebe, aber auch elektronische Schaltungen, Datenspeicher und/oder Prozessoren zur Datenverarbeitung, z. B. Mikroprozessoren, vorgesehen werden. Weiterhin können im Rollkörperfür verschiedene Aufgaben Sensoren für physikalische Grössen wie z.B. Temperatur, Beschleunigung und/oder Wandler, z.B. piezoelektrische Wandler, pneumatischer Wandler, induktive Wandler oder elektromagnetische Wandler, eingesetzt werden.

Auch kann in dem Rollkörper eine Datenverarbeitungsanlage mit Datenspeicher vorgesehen werden, die Produktinformationen über im Rollkörper eingelagerte/transportierte Waren wie zum Beispiel Gewicht, Haltbarkeitsdatum, Ablaufdatum, Fertigungsdatum, Anzahl/Mengenangabe, Reifezustand, Temperatursollwert, Temperaturhistorie, Zustellnummer, eine Transportauftragsnummer, eine Statusangabe, Informationen zu Produktgeometrie, aufnimmt, verarbeitet und abgibt.

Dabei ist es denkbar, dass in der Datenverarbeitungsanlage mit den Produktdaten und Informationen über Position, Förderweg des Rollkörpers und andere äussere Parameter Rechenoperationen durchführt werden, und als Ergebnis dieser Rechneroperationen elektromechanische Stellglieder ansteuert werden, welche den weiteren Weg des Rollkörpers in einer Speicher- oder Transportanlage bestimmen.

Die vorliegende Erfindung ist in ihrem Umfang nicht auf die hier beschriebenen spezifischen Ausführungsformen beschränkt. Vielmehr ergeben sich für den Fachmann aus der Beschreibung und den dazugehörigen Figuren zusätzlich zu den hier offenbarten Beispielen verschiedene weitere Modifikationen der vorliegenden Erfindung, die ebenfalls in den Schutzbereich der Ansprüche fallen. Zusätzlich werden in der Beschreibung verschiedene Referenzen zitiert, deren Offenbarungsgehalt hiermit in deren Gesamtheit durch Referenz in die Beschreibung mit aufgenommen wird.

## Patentansprüche

1. Rollkörper (10; 10a-o) zur zeitweiligen Aufnahme von Gütern oder Waren zum Zwecke der Lagerung und/oder des Transports, welcher Rollkörper (10; 10a-l) eine einen Innenraum (12) umschliessende Hülle (11) aufweist, wobei im Innenraum (12) ein Nutzvolumen (13) zur Aufnahme der Güter vorgesehen ist, **dadurch gekennzeichnet, dass** im Innenraum (12) zusätzlich ein Energiespeicher (14, 27) und ein Energieverbraucher (15, 33) angeordnet sind, und dass der Energiespeicher (14, 27) mit dem Energieverbraucher (15, 33) zur Abgabe von Energie verbindbar ist.

2. Rollkörper nach Anspruch 1, **dadurch gekennzeichnet, dass** der Energiespeicher (14, 27) zur Speicherung von elektrischer Energie ausgebildet ist, und dass der Energieverbraucher (15, 33) elektrische Energie verbraucht.

3. Rollkörper nach Anspruch 2, **dadurch gekennzeichnet, dass** am oder im Rollkörper (10; 10a-o) Mittel (16; 19; 22a,b; 23a-c; 24; 28; 43a,b) zur Zuführung von elektrischer Energie von aussen vorgesehen sind, welche Mittel (16; 19; 22a,b; 23a-c; 24; 28; 43a,b) mit dem Energiespeicher (14, 27) in Verbindung stehen.

4. Rollkörper nach Anspruch 3, **dadurch gekennzeichnet, dass** die Mittel (16; 19; 22a,b; 23a-c; 24; 28; 43a,b) zur Zuführung von elektrischer Energie eine oder mehrere Induktionsspulen (16; 23a-c; 28) aufweisen.

5. Rollkörper nach Anspruch 4, **dadurch gekennzeichnet, dass** mehrere Induktionsspulen (23a-c) vorgesehen sind, die mit ihrer Spulenachse in unterschiedlichen Raumrichtungen orientiert sind.

6. Rollkörper nach Anspruch 3, **dadurch gekennzeichnet, dass** die Mittel (16; 19; 22a,b; 23a-c; 24; 28; 43a,b) zur Zuführung von elektrischer Energie von aussen zugängliche elektrische Kontakte (22a,b; 43a,b) umfassen.

7. Rollkörper nach Anspruch 6, **dadurch gekennzeichnet, dass** die elektrischen Kontakte (24) über die Aussenfläche des Rollkörpers (10f) verteilt angeordnet sind.

8. Rollkörper nach Anspruch 7, **dadurch gekennzeichnet, dass** der Rollkörper (10f) kugelförmig ist, und dass die elektrischen Kontakte (24) kalottenförmig ausgebildet sind.

9. Rollkörper nach Anspruch 3, **dadurch gekennzeichnet, dass** die Mittel (16; 19; 22a,b; 23a-c; 24; 28; 43a,b) zur Zuführung von elektrischer Energie wenigstens einen Lichtwandler (19) umfassen, welcher von aussen eingestrahltes Licht in elektrische Energie umwandelt.

10. Rollkörper nach einem der Ansprüche 1 bis 9, **dadurch gekennzeichnet, dass** der Energieverbraucher (15, 33) einen Antrieb (32, 33; 44a,b; 45a,b) zur autonomen Bewegung des Rollkörpers (10h; 10k; 10l) umfasst.

11. Rollkörper nach Anspruch 10, **dadurch gekennzeichnet, dass** der Antrieb wenigstens einen elektrischen Motor (33) umfasst, welcher wenigstens ein Antriebselement (32; 44a,b) zur Übertragung eines Drehmoments in Drehung versetzt.

12. Rollkörper nach Anspruch 10, **dadurch gekennzeichnet, dass** der Antrieb wenigstens eine Propellereinheit (45a,b) umfasst.

13. Rollkörper nach einem der Ansprüche 1 bis 12, **dadurch gekennzeichnet, dass** der Energieverbraucher (15) Mittel zur Datenverarbeitung und/oder Datenspeicherung und/oder Mittel zur drahtlosen Kommunikation und/oder Mittel zur Positionsbestimmung des Rollkörpers (10; 10a-o) umfasst.

14. Verfahren zum Betrieb eines Rollkörpers (10; 10a-l) nach einem der Ansprüche 1 bis 13, **dadurch gekennzeichnet, dass** der Energiespeicher (14) im Rollkörper austauschbar untergebracht ist, und dass der Energiespeicher (14) von Zeit zu Zeit gegen einen vollen Energiespeicher ausgetauscht wird.

15. Verfahren zum Betrieb eines Rollkörpers (10; 10a-o) nach einem der Ansprüche 1 bis 13, **dadurch gekennzeichnet, dass** der Energiespeicher (14; 27) im Rollkörper fest untergebracht ist, und dass der Energiespeicher (14; 27) von Zeit zu Zeit von aussen aufgeladen wird.

16. Verfahren nach Anspruch 15, **dadurch gekennzeichnet, dass** der Rollkörper (10b; 10e; 10g; 10h) wenigstens eine Induktionsspule (16; 23a-c; 28) aufweist, und dass der Rollkörper (10b; 10e; 10g; 10h) zum Aufladen des Energiespeichers (14; 27) einem Magnetfeld (18, 30) ausgesetzt wird.

17. Verfahren nach Anspruch 16, **dadurch gekennzeichnet, dass** das Magnetfeld (18, 30) ein Wechselfeld ist.

18. Verfahren nach Anspruch 15, **dadurch gekennzeichnet, dass** der Rollkörper (10; 10d; 10f) von aussen zugängliche elektrische Kontakte (22a,b; 43a,b) aufweist, und dass der Rollkörper (10; 10d; 10f) zum Aufladen des Energiespeichers (14) mit äusseren elektrischen Kontakten (22a,b) elektrisch verbunden wird.

19. Verfahren nach Anspruch 18, **dadurch gekennzeichnet, dass** der Rollkörper (10) zum Verbinden mit den äusseren elektrischen Kontakten in eine dafür vorgesehene Ladestation (41) bewegt wird.

20. Verfahren nach Anspruch 18, **dadurch gekennzeichnet, dass** der Rollkörper (10d) während des Rollens über eine vorgegebene Wegstrecke mit den äusseren elektrischen Kontakten (22a,b) elektrisch verbunden wird und verbunden bleibt.
